Europäisches Patentamt

European Patent Office

Office européen des brevets

(19)

(11) **EP 0 914 017 A1**

(12) **EUROPEAN PATENT APPLICATION**

(43) Date of publication:
**06.05.1999 Bulletin 1999/18**

(51) Int Cl.6: **H04Q 11/04**

(21) Application number: **98308861.8**

(22) Date of filing: **29.10.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.10.1997 JP 299129/97**

(71) Applicant: **ANDO ELECTRIC CO., LTD.**
**Tokyo 144 (JP)**

(72) Inventor: **Suzuki, Msayoshi,**
**c/o Ando Electric Co.Ltd.**
**Tokyo (JP)**

(74) Representative: **Read, Matthew Charles et al**
**Venner Shipley & Co.**
**20 Little Britain**
**London EC1A 7DH (GB)**

(54) **Burst traffic generator**

(57)     The object of the present invention is to provide a burst traffic generator suitable for testing congestion conditions in an asynchronous CBR network. The generator is provided with a constant-bit-rate traffic generator (20) for generating a cell forming trigger conforming to a constant-bit-rate traffic pattern; a processing section for computing cell positions after introducing a time-perturbation, in accordance with parameters input by an operator, including a number of cells to be transposed, line speed and constant-bit rate cell rate; a burst perturbation memory (24) for storing post-perturbation cell trains according to computed cell positions produced by the computational device; and, a burst memory counter (22) for counting time to track the computed cell positions, and providing instructions to the memory (24) so as to provide a perturbation to each cell forming trigger, whenever a cell forming trigger is input from the constant-bit-rate traffic generator (20) into the burst memory counter (22).

FIG.1

**Description**

BACKGROUND OF THE INVENTION

Field of the Invention

The present invention relates in general to burst traffic generators, and relates in particular to a burst traffic generator operating in an asynchronous transmission mode (ATM) network to test the line congestion by temporarily, increasing the cell traffic speeds so as to create a pseudo-congestion condition in the line.

Description of the Related Art

In the broadband aspects of integrated services digital network (B-ISDN) based on the asynchronous transmission mode (ATM hereinbelow) technology, all types of media data including audio, video and data signals are handled in blocks of data called cells. More specifically, information is transmitted to the network by dividing the original data into a number of cells while the received information is restored by assembling the received data in a certain sequence according to the instructions contained in the cells. Each cell has a fixed length of 53 bytes, and can transmit a variety of data traffic.

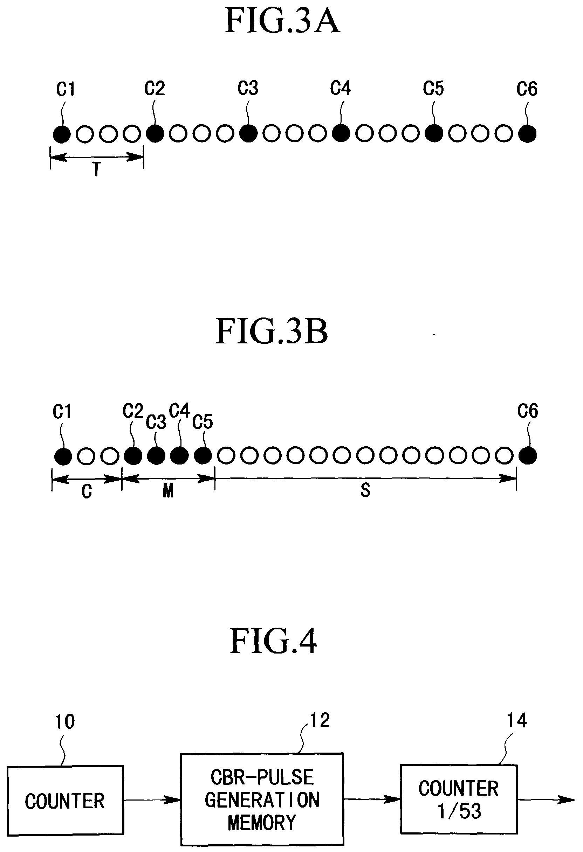

Operation of the traffic generator will be explained with reference to a block diagram of a conventional traffic generator shown in Figure 4, which is comprised by an address counter 10, a memory device (referred to as pulse generation memory) 12 to store constant-bit-rate (CBR) pulses to be generated for testing the line, and a pulse counter 14.

Counter 10 specifies a time spacing for data traffic, and a traffic speed is specified in relation to the range of relevant addresses of the contents of the memory device 12. Traffic speed is obtained by dividing the line speed of the test line by a desired step speed, and the result specifies the address range for the counter 10. For example, if the line speed is 155.52 MHz, and if a step speed of 64 kbit/s is desired, the range to be counted will be 0~2429.

Counter 10 then spreads out the test bits in approximately equal time intervals within the computed address range obtained by dividing the desired speed by the step speed. For example, if the desired step speed is 64 kbit/s, then the range will be given by two addresses corresponding to an address [0] and address [2494].

If the desired step speed generation is 128 kbit/s, two addresses will be specified at [0] and [1215].

In other words, the address counter 10 successively counts each address in the specified range (if the step speed is 64 kbit/s, the range is from address [0] to address [2429]), therefore, as the specified step speed becomes faster, this range becomes shorter. The counter 10 outputs a stop pulse each time it completes counting a certain address range.

CBR-pulse generation memory 12 stores predetermined pulse strings, and, every time the counter 10 outputs a stop pulse, it outputs a string of memorized pulses. Counter 14 counts pulse strings output from CBR-pulse generation memory 12 until one cell becomes full, and outputs a cell forming trigger signal conforming to the traffic pattern. Here, cell forming trigger means a trigger signal to specify when to form a new cell. In B-ISDN network, the size of each cell is fixed at 53 bytes, therefore, the cell counter 14 generates a cell forming trigger for every count of 53 bytes in a stream of pulse strings. Also, the counter 14 resets itself for every count of 53 bytes.

To test the line speed using the traffic generator of the construction described above, the operator enters the desired step speed into the address counter 10, and an address range is specified by dividing the line speed by the step speed desired by the operator. Once the address range is established, a stop count pulse is output from the counter 10 at specific time intervals. Every time a stop count pulse is input into the CBR-pulse generation memory 12, it outputs a pulse string stored in its memory. The output pulse strings are counted by the pulse counter 14, and when a total becomes equal to the capacity of one cell, a cell forming trigger conforming to the traffic pattern is output, the count value is reset, and another count is started to repeat the process of filling another cell.

As can be understood, therefore, the conventional traffic generator generates cell forming triggers by developing pulse strings using the CBR-pulse generation memory 12 so as to simulate some traffic patterns (n integers) which would occur in the operating line.

However, the conventional traffic generator can only generate uniformly spaced cell forming triggers conforming to the CBR traffic pattern in the network line.

In actual operating situations, depending on the timing and volume of information generated by the user, data traffic patterns are not necessarily spaced at equal intervals, so that the conventional traffic generator is not suitable for determining instantaneous state of cell congestion. Therefore, the conventional traffic generator is not suitable to testing instantaneous congestion conditions that can happen inside the network.

SUMMARY OF THE INVENTION

It is an object of the present invention to provide a burst traffic generator that enables line tests to be performed under condition simulating instantaneous congestion in the network line.

The object has been achieved in a burst traffic generator comprising: a constant-bit-rate traffic generator for generating a cell forming trigger conforming to a constant-bit-rate traffic pattern; a computational device for computing cell positions after introducing a time-perturbation, in accordance with parameters input by an operator, including a number of cells to be transposed, line speed and constant-bit rate cell rate; a memory device for storing post-perturbation cell trains according to computed cell positions produced by the computational device; and, a clock device for counting time to track the computed cell positions, and providing instructions to the memory device so as to provide a perturbation to each cell forming trigger, whenever the cell forming trigger is input from the constant-bit-rate traffic generator into the clock device.

Accordingly, the present burst traffic generator is able to instantaneously disturb the cell trains in a given CBR traffic pattern to simulate actual congestion which can take place in an asynchronous data transmission network.

A feature of the generator is that the clock device provides a time-perturbation to a cell forming trigger, when a computed cell position produced by the computational device lies within a spacing between cells computed according to the line speed and the constant-bit-rate cell rate.

Another feature is that the generator is further provided with means for introducing a time-perturbation to a cell forming trigger, when a computed cell position produced by the computational device lies outside a spacing between cells computed according to the line speed and the constant-bit-rate cell rate.

Another feature is that the generator is provided with means for transmitting a perturbed cell forming trigger and blocking transmission of un-perturbed cell forming trigger.

BRIEF DESCRIPTION OF THE DRAWINGS

Figure 1 is a block diagram of a first embodiment of the burst traffic generator of the present invention.

Figure 2 is a flowchart showing the computational steps for computing parameters for transposition of a cell using the burst traffic generator.

Figure 3 is an example of transposing a cell.

Figure 4 is a block diagram of a conventional traffic generator.

DETAILED DESCRIPTION OF THE PREFERRED EMBODIMENTS

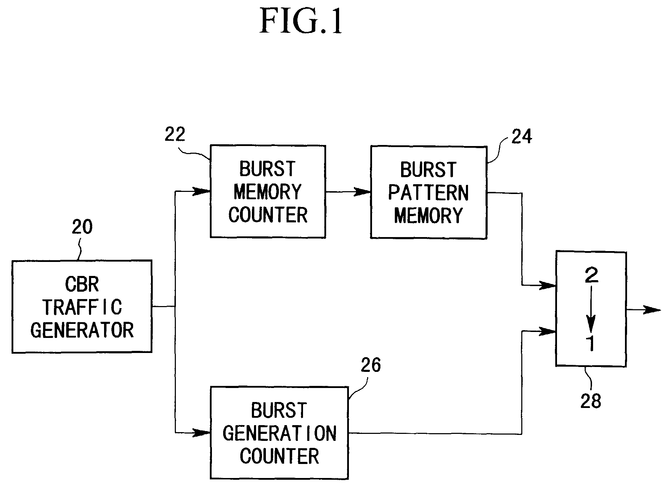

Preferred embodiments will be presented with reference to the drawings in the following. Figure 1 is a block diagram of a first embodiment of the burst traffic generator.

In Figure 1, a CBR traffic generator (burst traffic generation means) 20 is a counter to operate a memory which stores un-perturbed test pulses, and functions as the generator of cell forming triggers. The CBR traffic generator 20 is comprised by the conventional traffic generator shown in Figure 4, which includes a counter 10, a CBR-pulse generation memory 12 and another counter 14.

A burst memory counter (clock means) 22 memorizes burst test pulses to be generated, and outputs address signals to specify addresses in a burst pattern memory 24 (to be explained later) according to computed perturbation times to disturb the sequence of injecting cells into the line. The burst pattern memory 24 (memory device) outputs a time-perturbed cell train produced according to the address signals received from the burst memory counter 22.

A burst generation counter (means for providing a time-perturbation to a cell forming trigger) 26 is a counter for outputting burst pulses, and introduces a perturbation to a cell forming trigger output from the CBR traffic generator 20. The structure of this burst generation counter 26 is basically the same as the structure of the burst memory counter 22, but the difference is in the mode of operation, i.e., depending on the number of cells affected by the choice of a particular perturbation, either the burst memory counter 22 or the burst generation counter 26 is used to produce a perturbation in the traffic test pulses. This will be explained in more detail later.

A burst cell train selector (mask means) 28 chooses a cell forming trigger from either the burst pattern memory 24 or the burst generation counter 26.

Although not shown in Figure 1, the apparatus also includes an operator terminal for inputting various parameters, and a processing section (computation means) for computing time-perturbations for the cells according to various parameters input from the operator terminal, as well as a memory section for storing values for the parameters.

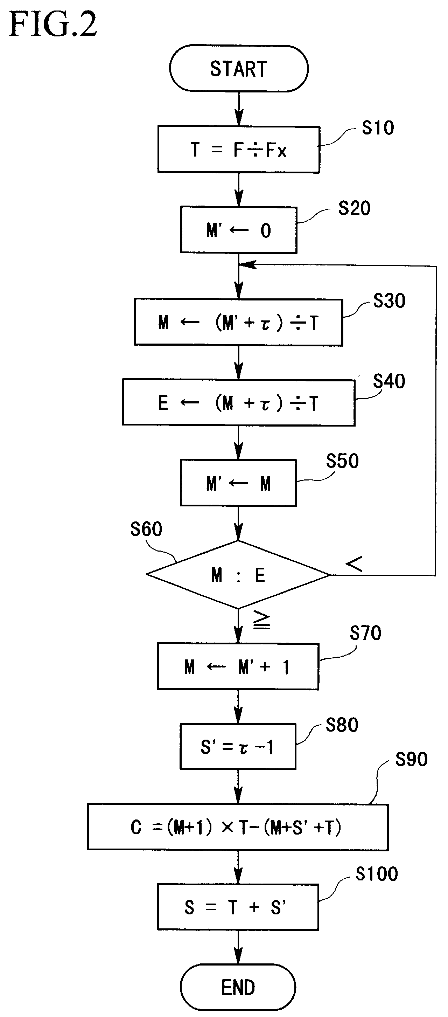

The action of the burst traffic generator in the first embodiment will be explained with reference to Figures 2~3.

Figure 2 is a flowchart showing the steps for computing the magnitude of a time-perturbation in the burst traffic generator, and Figure 3 shows an example of the time-perturbation given to a cell.

First, the operator inputs parameters into the burst traffic generator 20, i.e., a line speed (F), a CBR cell rate ($F_x$), and the number of cells to be transposed ($\tau$).

The following explanation refers to line speed (F) at 155,520 [kbit/s], CBR cell rate value ($F_x$) at 37,440 [kbit/s] and the number of transposed cell is ten. In effect, cell C5 is advanced in transmission sequence by ten cells.

When these parameters are entered, a processing section executes the steps shown in Figure 2. First, in step S10, the line speed (F) is divided by the CBR cell rate ($F_x$) to compute the cell interval (T). In the example shown in Figure 3, the computed spacing between cells is [4]. It is to be noted that the cell interval (T) is measured as a whole time unit between cells, and decimals are ignored.

Figure 3A and 3B show cells C1~C6 being arranged on a time-axis, and each cell position occupies a point in the time space represented by the unfilled circles. In other words, cells C1, C2, C3, C4, C5 and C6 are generated uniformly in this sequence from the CBR traffic generator 20.

The cell interval (T) computed in step S10 refers to the un-perturbed time interval between C1 and C2, C2 and C3, C3 and C4, ... and so on, as shown in Figure 3A.

After completing step S10, it proceeds to step S20, and a variable M', which is provided temporarily, is initialized by putting [0] in the variable M'. This variable is stored in the memory section. After completing step S20, it proceeds to step S30, and a value of M is computed according to the following relation.

$$M = (M'+\tau)/T \qquad (1)$$

In this step, the number computed relates to the number of cells affected by moving C5 by the amount specified by ($\tau$). That is, in the example shown in Figure 3, the number of cells perturbed, ($\tau$), is [10] so that when C5 is moved to the position shown in Figure 3B, cells C3 and C4 are affected. In the initial trial in step S30, the computed value of M is [2.5] indicating that two cells will be affected.

When processing in step S30 is completed, the program proceeds to step S40, and a variable E is computed using the value of variable M obtained in equation (1), according to the following relation.

$$E = (M+\tau)/T \qquad (2)$$

In this step, the cells are actually transposed and the total number of cells which are affected by this movement of cells, is calculated. It means that, in the case shown in Figure 3B, when cell C5 is moved by a distance equal to ten cells, cells C3 and C4 must also be moved. In this computation, calculated result relates to the number of affected cells when C3 and C4 are moved, and, in this particular case, the value of variable E is [3.125], indicating that three cells, i.e., cells C2, C3 and C4, are affected by moving the cell C5.

In step S50, the variable M obtained in step S30 is processed so as to contain it within the temporary variable M'.

In step S60, the value of variable M obtained in step S30 is compared with the value of variable E obtained in step S40. If the value of variable M is less than the value of variable E, process returns to step S30 to repeat the computations.

On the other hand, if the value of variable M is larger than the value of variable E, the program proceeds to step S70. In step S70, [1] is added to the value of variable M' and the result is stored in the variable M. As shown in Figure 3B, because the variable M, which is required in later computation, is larger than the value of variable M by [1] obtained in step S30, the process in step S70 is necessary.

In step S80, computation is made to obtain a temporary variable S'. This variable S' is obtained by subtracting [1] from the number of time-perturbed cells ($\tau$). As shown in Figure 3B, this value is nine and relates to the distance between the original position of cell C5 (refer to Figure 3A) and post-perturbation position of cell C5.

In step S90, computation is made to obtain the number of cells C which lie between the cell not subjected to a time-perturbation and the first of the cells which have been affected by the transposition. In the example shown in Figure 3B, C1 has not been subjected to transposition and cell C2 is the first of the cells affected by the transposition, so that the number of cells between the cells C1, C2 gives the value of C. This computation is carried out using the following relation.

$$C = (M+1) \times T - (M+S'+T) \qquad (3)$$

The first term on the right-hand side of equation (3) relates to the number of cells bounded by the non-affected cells which surround the affected cells. In the case shown in Figure 3B, C2~C5 are affected cells, and C1 and C6 are the adjoining non-affected cells surrounding the affected cells C2~C5. Therefore, the computation yields the number of cells contained within the cells C1 and C6.

The second term on the right-hand side of equation (3) relates to the number of cells bounded by the first affected cell (C2 in Figure 3B) and the first non-affected cell (C6 in Figure 3B). Therefore, by subtracting the second term from the first term in equation (3), the number of cells C, which lie between the non-affected cell C1 and the first cell C2 affected by the transposition, is obtained. In the example shown in Figure 3B, the value of C is [3].

Finally, the program proceeds to step S100, and in this step, the number of cells S, which lie between the last affected cell and the first non-affected cell, is obtained.

The above series of steps completes the computation of parameters necessary to provide time-perturbation to the cells. Before the cell forming trigger is generated, the computed parameters (C, M, S) are input into the burst memory counter 22, burst pattern memory 24 and burst generation counter 26.

When these parameters are input into the burst pattern memory 24, a burst pattern of the cells is developed according to a time-sequence. Specifically, starting from the time position of C1, there will be no outputting of a cell during the period given by parameter C, but after a passage of time period given by C, there will be outputting of cells C2~C5 during the ensuing period given by parameter M, and after a passage of time period given by M, there will be no outputting of a cell during the ensuing period given by parameter S.

When the operator begins measurements and presses the start button (not shown), CBR traffic generator 20 shown in Figure 1 outputs a cell forming trigger which is input into both the burst memory counter 22 and the burst generation counter 26.

Different processing approach is used depending on whether the cell interval (T) is larger or smaller than the number of cells (τ) to be transposed. These approaches are explained below.

(1) When cell interval (T) ≥ transposed cells (τ)

When the operator presses the test start button, a cell forming trigger is input into the burst generation counter 26 and simultaneously, the burst generation counter 26 begins counting for an interval specified by the parameter C.

Immediately after completion of the count, the burst generation counter 26 generates a pulse comprised by a transposed cell train. Immediately after generating the pulse, a cell forming trigger signal from the CBR traffic generator 20 is blocked, thereby injecting a perturbation (a burst pulse) into the line.

(2) When cell interval (T) < transposed cells (τ)

When the operator presses the test start button, a cell forming trigger is input into the burst memory counter 22 and simultaneously, the burst memory counter 22 begins counting according to the input parameters. For example, a count stop pulse is generated at every boundary points specified by the parameters (C, M, S) and addresses are specified in the burst pattern memory 24, and a cell train developed in the burst pattern memory 24 is injected into the line.

**Claims**

1. A burst traffic generator comprising:

   a constant-bit-rate traffic generator for generating a cell forming trigger conforming to a constant-bit-rate traffic pattern;
   a computational device for computing cell positions after introducing a time-perturbation, in accordance with parameters input by an operator, including a number of cells to be transposed, line speed and constant-bit rate cell rate;
   a memory device for storing post-perturbation cell trains according to computed cell positions produced by said computational device; and,
   a clock device for counting time to track said computed cell positions, and providing instructions to said memory device so as to provide a perturbation to each cell forming trigger, whenever said cell forming trigger is input from said constant-bit-rate traffic generator into said clock device.

2. A burst traffic generator according to claim 1, wherein said clock device provides a time-perturbation to a cell forming trigger, when a computed cell position produced by said computational device lies within a spacing between cells computed according to said line speed and said constant-bit-rate cell rate.

3. A burst traffic generator according to claim 2, wherein said generator is further provided with means for introducing a time-perturbation to a cell forming trigger, when a computed cell position produced by said computational device lies outside a spacing between cells computed according to said line speed and said constant-bit-rate cell rate.

4. A burst traffic generator according to claim 3, wherein said generator is provided with means for transmitting a perturbed cell forming trigger and blocking transmission of unperturbed cell forming trigger.

# FIG.1

## FIG.2

```
        ┌──────────┐
        │  START   │
        └──────────┘
             │
             ▼
     ┌────────────────┐
     │   T = F ÷ Fx   │─── S10
     └────────────────┘
             │
             ▼
     ┌────────────────┐
     │    M' ← 0      │─── S20
     └────────────────┘
             │
             ▼ ◄──────────────────────┐
  ┌──────────────────────┐            │
  │  M ← (M' + τ) ÷ T    │─── S30     │
  └──────────────────────┘            │
             │                        │
             ▼                        │
  ┌──────────────────────┐            │
  │  E ← (M + τ) ÷ T     │─── S40     │
  └──────────────────────┘            │
             │                        │
             ▼                        │
     ┌────────────────┐               │
     │    M' ← M      │─── S50        │
     └────────────────┘               │
             │                        │
 S60         ▼                        │
        ╱─────────╲          <        │
       ╱   M : E   ╲─────────────────┘
       ╲           ╱
        ╲─────────╱
             │ ≧
             ▼
     ┌────────────────┐
     │   M ← M' + 1   │─── S70
     └────────────────┘
             │
             ▼
     ┌────────────────┐
     │   S' = τ − 1   │─── S80
     └────────────────┘
             │                        S90
             ▼
 ┌────────────────────────────────┐
 │  C = (M+1) × T − (M+S' +T)     │
 └────────────────────────────────┘
             │
             ▼                        S100
     ┌────────────────┐
     │   S = T + S'   │
     └────────────────┘
             │
             ▼
        ┌──────────┐
        │   END    │
        └──────────┘
```

# FIG.3A

C1       C2       C3       C4       C5       C6

●○○○○●○○○○●○○○○●○○○○●○○○○●

T

# FIG.3B

C1       C2 C3 C4 C5                C6

●○○○●●●●○○○○○○○○○○○○○○○○○●

C     M         S

# FIG.4

10              12            14

COUNTER → CBR-PULSE GENERATION MEMORY → COUNTER 1/53 →

**European Patent Office**

**EUROPEAN SEARCH REPORT**

Application Number

EP 98 30 8861

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 097, no. 002, 28 February 1997 -& JP 08 274774 A (ANDO ELECTRIC CO LTD), 18 October 1996 * abstract * | 1-4 | H04Q11/04 |
| A | WO 97 35407 A (3COM CORP) 25 September 1997 * page 2, line 13 - line 19 * * page 8, line 18 - page 9, line 15 * | 1-4 | |
| A | DUFF J A: "TEST CHALLENGES OF ATM" ANNUAL REVIEW OF COMMUNICATIONS, vol. 46, 1 January 1993, pages 320-328, XP000321941 * the whole document * | 1-4 | |
| | | | **TECHNICAL FIELDS SEARCHED (Int.Cl.6)** |
| | | | H04Q |

The present search report has been drawn up for all claims

| Place of search | Date of completion of the search | Examiner |
|---|---|---|
| THE HAGUE | 4 February 1999 | Lindner, A |

EPO FORM 1503 03.82 (P04C01)

**ANNEX TO THE EUROPEAN SEARCH REPORT
ON EUROPEAN PATENT APPLICATION NO.**

EP 98 30 8861

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-1999

| Patent document cited in search report | | Publication date | Patent family member(s) | | Publication date |
|---|---|---|---|---|---|
| WO 9735407 | A | 25-09-1997 | AU | 2342697 A | 10-10-1997 |

For more details about this annex : see Official Journal of the European Patent Office, No. 12/82